# FASCICULE DE BREVET EUROPEEN

(11) **EP 3 412 478 B1**
(45) Date de publication et mention de la délivrance du brevet: **06.01.2021**
(21) Numéro de dépôt: 18175966.3
(22) Date de dépôt: 05.06.2018
(51) Int. Cl.: B60D 1/02, B60D 1/167, B60D 1/24

(54) **DISPOSITIF DE TIMON POUR REMORQUE ET REMORQUE CORRESPONDANTE**
ZUGSTANGENVORRICHTUNG FÜR ANHÄNGER, UND ENTSPRECHENDER ANHÄNGER
TRAILER DRAWBAR DEVICE AND CORRESPONDING TRAILER

(30) Priorité: 06.06.2017 FR 1754990
(43) Date de publication de la demande: 12.12.2018
(73) Titulaire: Kuhn-Audureau SAS, 85260 La Copechagnière (FR)
(72) Inventeur: PETERSCHMITT, Mickaël, 85300 LE PERRIER (FR); MIGNON, Florent, 85250 SAINT-ANDRE-GOULE-D'OIE (FR)
(74) Mandataire: Cabinet Nuss

(56) Documents cités:
- EP-A1- 2 289 717
- DE-U1-202017 101 537
- GB-A- 2 462 482
- US-A1- 2005 283 296

## Description

La présente invention concerne le domaine de l'équipement et du matériel de transport roulant, notamment dans le domaine agricole et plus particulièrement les remorques semi-portées, destinées à être attelées à un véhicule tracteur par un dispositif de timon.

L'objet de l'invention vise plus particulièrement un dispositif de timon perfectionné pour remorque du type précité, ainsi qu'une remorque, en particulier du type mélangeuse, comportant un tel dispositif.

On connaît déjà dans l'état de la technique des dispositifs de timon présentant une construction coulissante ou à glissière, c'est-à-dire une structure télescopique dans laquelle la partie ou pièce d'accrochage (généralement une barre munie d'un anneau d'accrochage) est assemblée, avec une faculté de coulissement limité, par emboîtement sur ou dans une partie ou pièce solidaire du ou appartenant au châssis du véhicule tracté, et formant fourreau ou rail guide.

Le mouvement relatif en translation entre les deux composants du timon peut permettre, par la mise en œuvre de moyens d'amortissement, d'éviter les à-coups entre véhicules tracteur et tracté lors du roulement.

Mais ce mouvement coulissant est surtout exploité pour réaliser, de manière connue, un freinage par inertie, éventuellement proportionnel, le déplacement de la partie mobile d'accrochage commandant des moyens de freinage du véhicule tracté. Ainsi, lors d'une phase de freinage de l'attelage commandée par le conducteur du véhicule tracteur, non seulement les moyens de freinage de ce dernier sont activés, mais également, par la poussée inertielle de la remorque comprimant axialement le timon télescopique, les moyens de freinage de ladite remorque sous l'action du déplacement coulissant précité. La transmission de la commande depuis le timon peut par exemple se faire par un câble, par une tringlerie ou par une ligne hydraulique.

Des exemples de telles réalisations de dispositif de timon ressortent par exemple des documents FR 2 655 002, EP 0 001 299 et EP 2 289 717.

Par ailleurs, il peut également être nécessaire, ou au moins intéressant ou utile, de récupérer au niveau du timon une information relative à la force d'appui exercée par le véhicule tracté au niveau de l'accrochage, soit pour une exploitation en relation avec le véhicule tracteur, soit pour une exploitation en relation avec le véhicule tracté ou son chargement. Dans ce dernier cas, et pour disposer d'une information valable, des moyens de pesage supplémentaires doivent être installés au niveau de l'essieu ou des roues du véhicule tracté.

Ainsi, l'homme du métier sait que, en particulier dans certaines applications dans le domaine agricole, il est fortement souhaitable de pouvoir effectuer une pesée d'un chargement transporté par un véhicule tel qu'une remorque sans nécessiter de moyen de pesée extérieur additionnel, c'est-à-dire en disposant d'un moyen de pesée intégré, préférentiellement taré par rapport au contenant ou à la remorque vide.

Tel est notamment le cas pour les mélangeuses ou remorques mélangeuses destinées à assurer la distribution de mélanges d'aliments fibreux, granulaires et/ou pulvérulents en vrac sous forme de rations optimisées sur le plan nutritionnel et sur le plan technico-économique.

Dans ce contexte, la pesée est l'élément clé pour la réalisation de la ration correspondant à l'ensemble des aliments constitutifs d'un régime distribué quotidiennement en vue de satisfaire leurs besoins. Ainsi, pour la production de lait des vaches laitières, la ration doit pratiquement toujours être identique, elle est composée de fourrage grossier (foin, ensilage d'herbe et de maïs), aliments succulents (céréales) et d'aliments concentrés (tourteaux, graines de protéagineux) pour compenser les éventuels déséquilibres nutritionnels.

Pour aboutir à une mixture à distribuer qui est relativement homogène, ces matériels comprennent des organes rotatifs tels que des vis. Tel est notamment le cas des mélangeuses des types connus sous les désignations "EUROMIX" ou "PROFILE" (marques déposées) de la société KUHN.

Ces mélangeuses présentent bien entendu également un dispositif de timon d'attelage et un dispositif de roulement du type essieu simple ou essieu double (pour les mélangeurs de grande capacité).

En outre, les mélangeuses connues comportent généralement un châssis spécifique supportant la cuve, relié au ou intégrant le dispositif de timon et monté sur l'essieu.

Toutefois, en variante à une telle réalisation à châssis indépendant, la demanderesse notamment propose des mélangeuses dépourvues de châssis spécifique.

L'avantage d'une telle mélangeuse à châssis intégré (sans châssis indépendant) est l'optimisation structurelle (on récupère l'inertie de la cuve pour rigidifier la structure lorsqu'elle subit des efforts importants liés aux transports) et la hauteur réduite qui permet l'accès à des bâtiments avec une ouverture (porte) moins haute.

Lorsque le dispositif de roulement d'une telle mélangeuse, et plus généralement d'une remorque quelconque, est du type à essieu simple, c'est-à-dire lorsque la remorque est du type semi-porté, des pesons ou des capteurs de pesée analogues doivent être montés, d'une part, au niveau de l'essieu et, d'autre part, au niveau du timon, pour pouvoir disposer d'une information juste et fiable sur le poids du chargement de la remorque.

Or, il existe un besoin, actuellement non satisfait, d'intégration des deux fonctions précitées, à savoir disposer d'un dispositif de timon présentant une structure coulissante (en particulier pour commander un freinage inertiel) et intégrant un moyen de pesée, en particulier dans le domaine des mélangeuses, mais également de manière plus générale dans le domaine des remorques semi-portées.

Toutefois, à ce jour, aucune solution simple, pouvant être produite industriellement à des coûts raisonnables et permettant d'intégrer les deux fonctions sans interférence mutuelle, n'a été proposée.

A titre d'exemple, la mélangeuse connue sous la désignation PROFILE par la demanderesse intègre un peson dans le dispositif de timon et comporte des moyens de freinage actionnés par un vérin au niveau de son essieu. La mise en œuvre d'un freinage inertiel dans cette mélangeuse connue supposerait à l'évidence l'intégration du peson du timon dans la partie d'accrochage formant la partie mobile du timon. Or, cette partie consistant en une pièce de fonderie, il y aurait lieu de réaliser une pièce spécifique et plus complexe apte à recevoir le peson : une telle solution est beaucoup trop onéreuse.

Le problème posé à la présente invention consiste par conséquent à proposer une construction de dispositif de timon intégrant les deux propriétés précitées et permettant de surmonter les inconvénients mentionnés ci-dessus.

A cet effet, l'invention a pour objet un dispositif de timon pour remorque ou analogue, notamment du type semi-portée, présentant un axe longitudinal et comprenant une partie avant d'accrochage à un véhicule tracteur et une partie arrière appartenant au châssis de la remorque ou reliée rigidement à ce dernier ou au contenant ou plateau support de ladite remorque,
dispositif de timon caractérisé en ce qu'il comprend également une partie intermédiaire de liaison qui est reliée, d'une part, à la partie avant par une liaison à glissière avec faculté de coulissement relatif dans la direction de l'axe longitudinal et, d'autre part, à la partie arrière par l'intermédiaire d'une liaison pivot avec un axe de rotation sensiblement perpendiculaire à l'axe longitudinal et par l'intermédiaire d'au moins un peson bloquant la rotation autour dudit axe de rotation.

L'invention sera mieux comprise, grâce à la description ci-après, qui se rapporte à un mode de réalisation préféré, donné à titre d'exemple non limitatif, et expliqué avec référence aux dessins schématiques annexés, dans lesquels :
les figures 1 à 3 sont des vues respectivement en perspective, en élévation latérale (avec un flanc enlevé) et de dessus d'un dispositif de timon selon l'invention ;
la figure 4 est une vue en coupe selon un plan vertical contenant l'axe longitudinal du dispositif de timon représenté figures 1 à 3 ;
les figures 5 et 6 sont des vues respectivement en élévation latérale et de dessus d'une remorque mélangeuse semi-portée comportant un dispositif de timon tel que représenté sur les figures 1 à 4, et

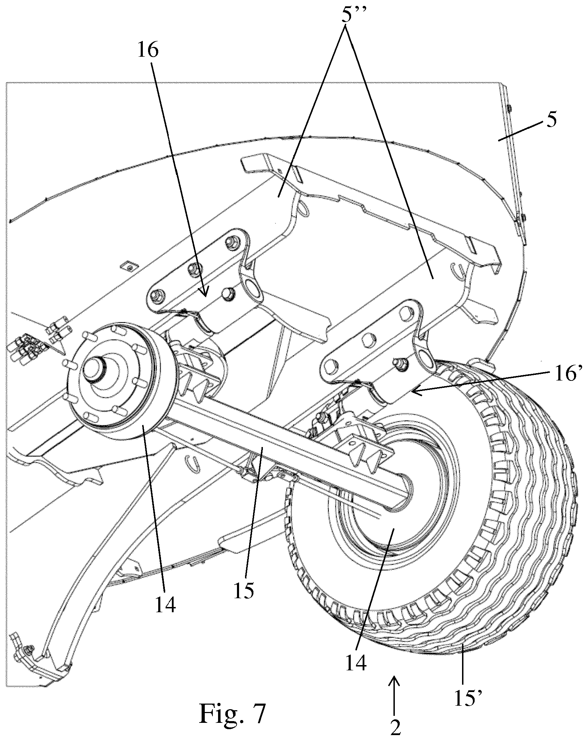

la figure 7 est une vue partielle en perspective et de dessous de la remorque représentée figures 5 et 6, montrant l'environnement de l'essieu de la remorque.

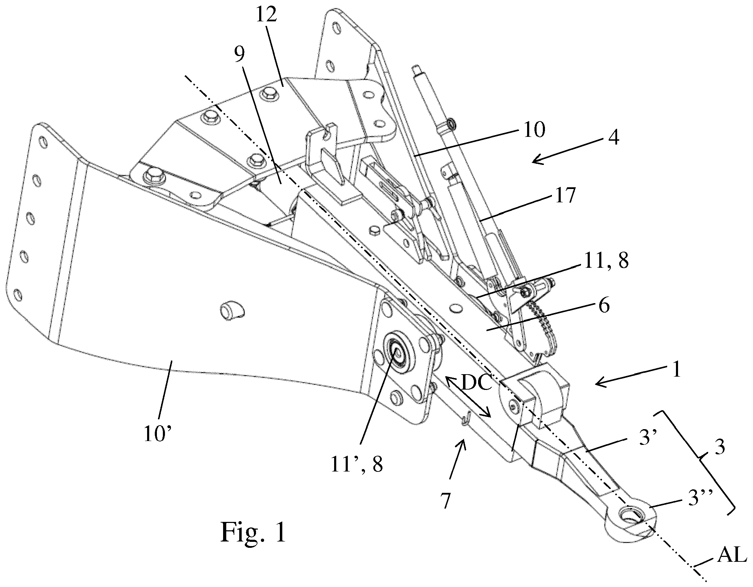

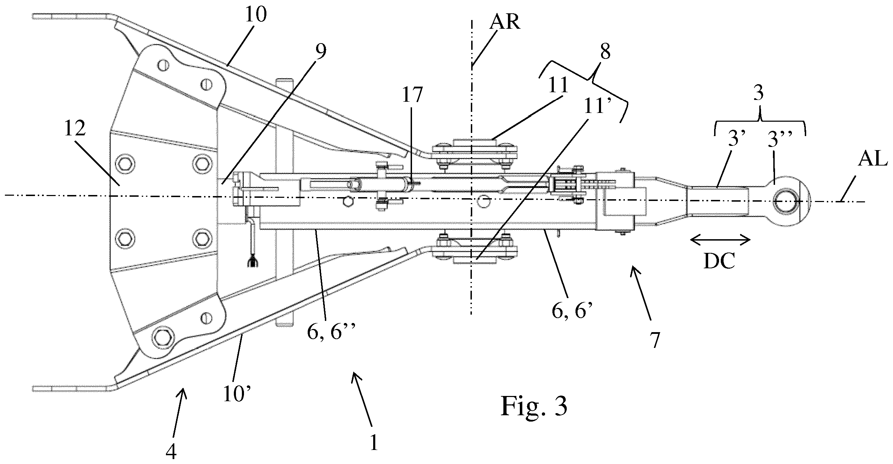

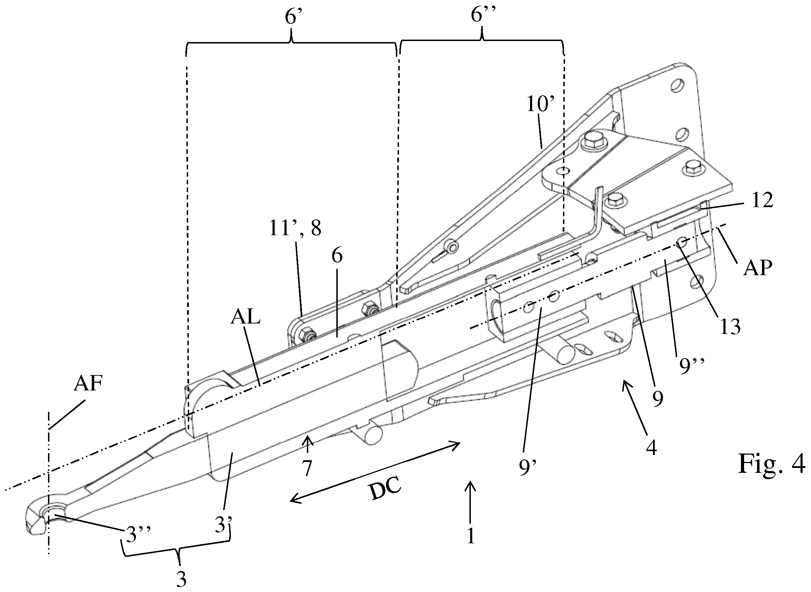

Les figures 1 à 4 montrent un dispositif de timon pour remorque ou analogue, notamment du type semi-portée, présentant un axe longitudinal AL et comprenant une partie avant 3 d'accrochage à un véhicule tracteur et une partie arrière 4 appartenant au châssis de la remorque 2 ou reliée rigidement à ce dernier ou au contenant ou plateau support 5 de ladite remorque 2.

Conformément à l'invention, ce dispositif de timon 1 comprend également une partie intermédiaire 6 de liaison qui est reliée, d'une part, à la partie avant 3 par une liaison à glissière 7 avec faculté de coulissement relatif dans la direction de l'axe longitudinal AL et, d'autre part, à la partie arrière 4 par l'intermédiaire d'une liaison pivot 8 avec un axe de rotation AR sensiblement perpendiculaire à l'axe longitudinal AL et par l'intermédiaire d'au moins un peson 9 bloquant la rotation autour dudit axe de rotation AR.

En prévoyant la mise en œuvre d'une partie intermédiaire de liaison 6 et un arrangement, ainsi qu'un assemblage, des trois parties 3, 4 et 6 tels qu'évoqués ci-dessus, l'invention permet, en conservant une partie avant d'accrochage 3 standard, et une construction de timon simple et résistante, d'intégrer les deux fonctions de déplacement relatif en translation de la partie avant 3 et de détermination exacte de la composante verticale des contraintes s'exerçant sur le dispositif de timon 1.

En effet, la liaison pivot 8 assure une liaison rigide directe entre les parties intermédiaire 6 et arrière 4 dans la direction de translation de ladite partie avant 3 (sans passer par le peson 9) et simultanément une liaison en libre rotation entre lesdites parties 4 et 6, bloquée par le peson 9 qui détermine ainsi la force de pression perpendiculaire à l'axe AL, exercée par la remorque 2 (couple généré autour de l'axe de l'essieu du fait du poids de la remorque chargée).

On peut relever que les deux actions précitées sont réalisées de manière non interférente, par des moyens distincts et indépendants, aboutissant à un désaccouplage total des deux fonctions (coulissement libre de la partie avant 3 et pesage) intégrées dans le dispositif de timon 1.

En accord avec une première caractéristique constructive possible de l'invention, la partie intermédiaire 6 se présente sous la forme d'une pièce rigide de constitution allongée dans la direction de l'axe longitudinal AL, avec une première portion constitutive longitudinale 6' recevant avec emboîtement coulissant une portion coopérante allongée 3' de la partie avant 3 d'accrochage et une seconde portion constitutive longitudinale 6" avec laquelle est solidarisée rigidement une première extrémité d'assemblage 9' du peson 9. La première portion 6 forme ainsi un logement allongé de coulissement pour la partie avant, lequel est pourvu d'une butée de retenue en cas de traction positive de la remorque 2.

En accord avec une deuxième caractéristique constructive possible de l'invention, la partie arrière 4 comporte deux longerons ou deux flancs 10 et 10' reliés latéralement par la liaison pivot 8, sous forme d'une articulation pivot commune ou de deux articulations pivot 11 et 11' mutuellement opposées et coaxiales, à la partie intermédiaire 6, lesdits flancs ou longerons 10 et 10' étant convergents en direction de ladite liaison pivot 8.

Conformément à une variante pratique de réalisation, ressortant des figures 1 à 4, et en vue de réduire les frottements au niveau de la liaison pivot 8 (meilleure précision de mesure au niveau du peson 9), les deux articulations pivot 11 et 11' reliant la pièce intermédiaire 6 avec les deux longerons ou flancs effilés 10 et 10' de la partie arrière 4 consistent en des paliers à roulements, préférentiellement du type paliers appliques, mutuellement coaxiaux et rapportés sur deux côtés longitudinaux opposés de ladite pièce intermédiaire 6.

Comme le montrent également ces figures, le peson 9 peut être solidarisé rigidement, par une seconde extrémité d'assemblage 9", avec une traverse ou une pièce de liaison transversale similaire 12 reliant entre eux les deux longerons ou flancs 10 et 10' de la partie arrière 4, ledit peson 9 présentant une constitution allongée et un arrangement aligné avec l'axe longitudinal AL.

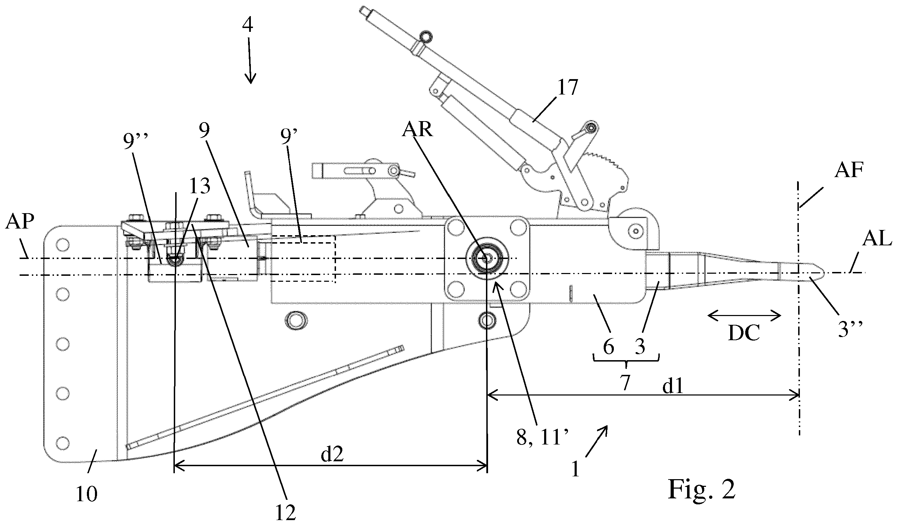

Selon un mode de réalisation avantageux de l'invention ressortant de la figure 2 des dessins annexés, l'axe de rotation AR de la liaison pivot 8 reliant la partie intermédiaire de liaison 6 et la partie arrière 4 est situé, selon la direction de l'axe longitudinal AL, entre, d'une part, le point central ou l'axe AF du moyen 3" d'accrochage frontal de la partie avant 3 et, d'autre part, le point d'ancrage ou de fixation 13 du peson 9 sur la partie arrière 4.

Préférentiellement, ledit axe de rotation AR est situé à distance sensiblement égale des deux points précités (dl = d2 sur la figure 1) optimisant la répartition des forces et la précision de la mesure. Cette caractéristique permet constructivement d'aboutir à une configuration telle que la force vue par le peson 9 soit sensiblement la même que celle vue par le moyen d'accrochage frontal 3".

Conformément à une variante de réalisation pratique extrêmement préférée, la partie avant 3 consiste en une pièce monobloc, préférentiellement venue de fonderie, comprenant un corps allongé 3' en forme de barreau ou de tige monté par emboîtement partiel coulissant dans une première portion constitutive longitudinale 6' de la pièce intermédiaire de liaison 6 et comportant, au niveau de son extrémité libre frontale, un moyen d'accrochage 3" mâle ou femelle avec un point ou un axe central AF, la direction de coulissement DC du corps allongé 3' de la partie avant 3 dans la pièce intermédiaire 6, l'axe longitudinal AP du peson 9 de forme allongée et l'axe longitudinal AL du dispositif de timon 1 étant colinéaires, préférentiellement coaxiaux et les distances d1 et d2 sont préférentiellement identiques.

En relation avec une mise en œuvre et une application très avantageuses du dispositif de timon 1 selon l'invention, la partie avant 6 coulissante constitue un organe de commande mobile dont le déplacement relatif par rapport à la partie intermédiaire 6 et/ou à la partie arrière 4 déclenche ou génère, le cas échéant proportionnellement, une action dans un système fonctionnel 14 déporté, appartenant à la remorque ou analogue 2 dont fait partie ledit dispositif de timon 1.

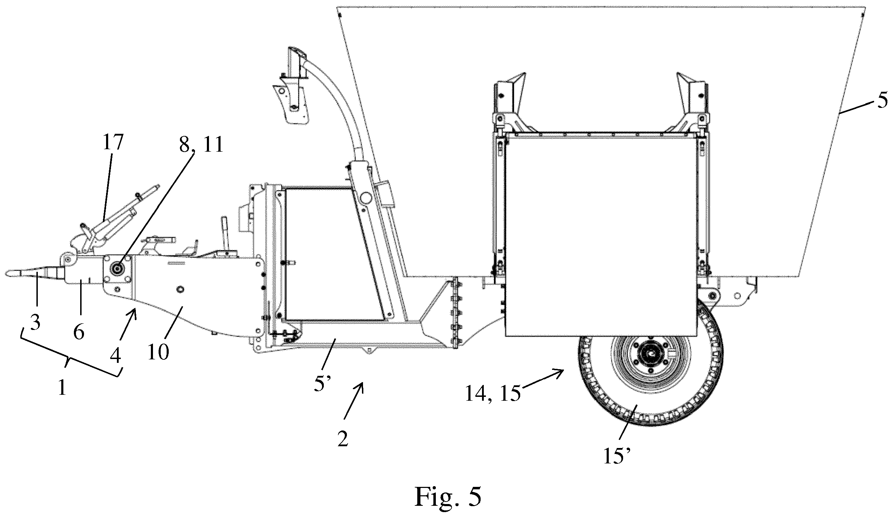

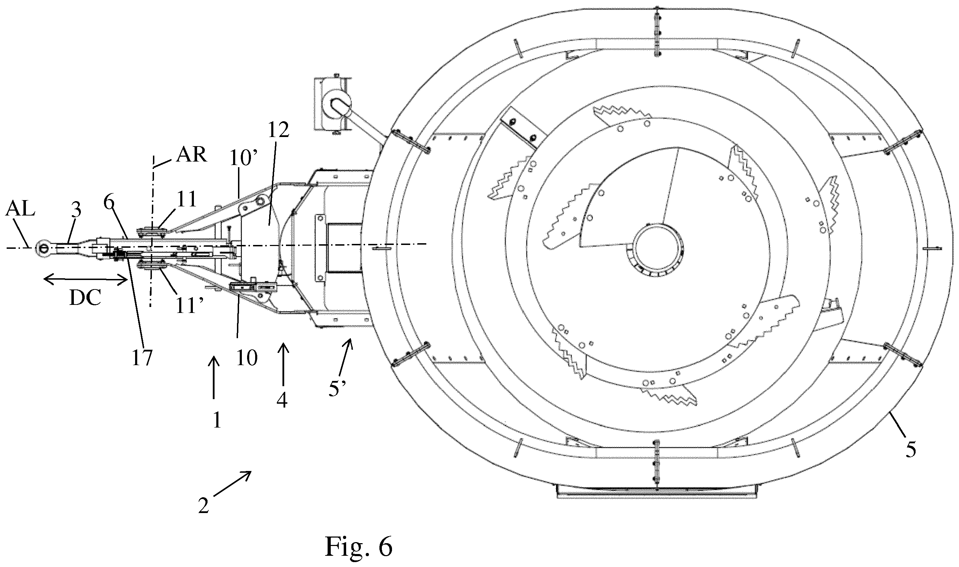

L'invention a également pour objet, comme cela ressort des figures 5 et 6 considérées avec les figure 1 à 4, une remorque 2 avec un essieu à roues 15 muni de moyens de freinage 14 et un dispositif de timon 1, du type à commande de freinage par inertie et à structure télescopique coulissante. Ce dispositif de timon 1 présente un axe longitudinal AL et comprend une partie avant 3 d'accrochage à un véhicule tracteur et une partie arrière 4 appartenant au châssis de la remorque 2 ou reliée rigidement à ce dernier ou directement au contenant 5 ou plateau de ladite remorque 2, qui est le cas échéant monté directement sur l'essieu 15 de cette dernière.

Conformément à l'invention, le dispositif de timon 1 comprend également une partie intermédiaire 6 de liaison qui est reliée, d'une part, à la partie avant 3 avec faculté de coulissement relatif de cette dernière dans la direction de l'axe longitudinal AL et, d'autre part, à la partie arrière 4 i) par l'intermédiaire d'une liaison pivot 8 avec un axe de rotation AR sensiblement perpendiculaire à l'axe longitudinal AL précité et sensiblement parallèle à l'axe des roues de l'essieu 15 et ii) par l'intermédiaire d'un peson 9 bloquant le pivotement autour de l'axe de rotation AR, l'état des moyens de freinage 14 étant dépendant de la position de coulissement relatif de la partie avant 3 par rapport à la partie intermédiaire 6.

Avantageusement, cette dépendance opérationnelle peut, au moins sur une plage déterminée, être proportionnelle, la ligne de commande pouvant se présenter par exemple sous la forme d'un câble, d'une tringlerie ou d'une ligne hydraulique.

Préférentiellement, le dispositif de timon 1 présente une, plusieurs ou toutes les caractéristiques décrites précédemment et consiste en un dispositif tel qu'énoncé ci-dessus.

Dans la remorque 2, le contenant ou plateau support 5 repose, par l'intermédiaire d'un châssis ou non, sur l'essieu 15 à travers au moins deux pesons latéraux additionnels 16 et 16'. Les figures 5 et 6 illustrent une mélangeuse sans châssis spécifique.

En accord avec une application préférée, mais non limitative de l'invention, et comme le montrent les figures 5 et 6, le contenant 5 consiste en une cuve munie de moyens internes de mélange de produits et équipée de moyens externes de distribution de produits, ladite cuve 5 étant montée directement sur l'essieu 15 sans châssis intermédiaire, le dispositif de timon 1 étant fixé rigidement à ladite cuve 5 ou à une partie avant de châssis 5' s'étendant, par exemple par des longerons 5", sous cette dernière en la supportant.

A titre d'exemple d'une telle remorque, cette dernière peut consister en une remorque mélangeuse semi-portée, comportant deux pesons latéraux 16 et 16' au niveau de l'essieu 15 et un peson 9 frontal intégré au dispositif de timon 1. Une telle mélangeuse peut par exemple également présenter certaines ou toutes les caractéristiques de la remorque mélangeuse divulguée dans la demande de brevet français n° 16 70356 au nom de la demanderesse.

Les moyens de freinage 14 peuvent par exemple être intégrés dans les moyeux des roues 15' portées par l'essieu 15.

Comme le montrent également les figures 1 à 3, 5 et 6, le dispositif de timon 1 peut comprendre également un organe 17 de commande manuelle des moyens de freinage 14, tel qu'un levier associé à un moyen de blocage en position à crans, cet organe 17 étant monté sur la pièce intermédiaire de liaison 6.

Bien entendu, l'invention n'est pas limitée au mode de réalisation décrit et représenté aux dessins annexés. Des modifications restent possibles, notamment du point de vue de la constitution des divers éléments ou par substitution d'équivalents techniques, sans sortir pour autant du domaine de protection de l'invention.

## Revendications

1. Dispositif de timon de remorque mélangeuse semi-portée agricole pour la distribution de mélanges d'aliments fibreux, granulaires et/ou pulvérulents en vrac, ce dispositif **(1)** présentant un axe longitudinal (AL) et comprenant une partie avant (3) d'accrochage à un véhicule tracteur et une partie arrière (4) appartenant au châssis de la remorque (2) ou reliée rigidement à ce dernier ou au contenant ou plateau support (5) de ladite remorque (2),
dispositif de timon (1) comprenant également une partie intermédiaire (6) de liaison qui est reliée, d'une part, à la partie avant (3) par une liaison à glissière (7) avec faculté de coulissement relatif dans la direction de l'axe longitudinal (AL) et **caractérisé en ce que** la partie intermédiaire (6) de liaison est reliée, d'autre part, à la partie arrière (4) par l'intermédiaire d'une liaison pivot (8) avec un axe de rotation (AR) sensiblement perpendiculaire à l'axe longitudinal (AL) et par l'intermédiaire d'au moins un peson (9) bloquant la rotation autour dudit axe de rotation (AR), **et**
**en ce que ladite liaison pivot (8) est configurée pour assurer simultanément et de manière non interférente, d'une part, une liaison rigide directe entre les parties intermédiaire (6) et arrière (4) dans la direction de coulissement de ladite partie avant (3), sans passer par le peson (9), et, d'autre part, une liaison en libre rotation entre lesdites parties (4 et 6), bloquée par le peson (9).**

2. Dispositif selon la revendication 1, **caractérisé en ce que** la partie intermédiaire (6) se présente sous la forme d'une pièce rigide de constitution allongée dans la direction de l'axe longitudinal (AL), avec une première portion constitutive longitudinale (6') recevant avec emboîtement coulissant une portion coopérante allongée (3') de la partie avant (3) d'accrochage et une seconde portion constitutive longitudinale (6") avec laquelle est solidarisée rigidement une première extrémité d'assemblage (9') du peson (9).

3. Dispositif selon l'une quelconque des revendications 1 et 2, **caractérisé en ce que** la partie arrière (4) comporte deux longerons ou deux flancs (10 et 10') reliés latéralement par la liaison pivot (8), sous forme d'une articulation pivot commune ou de deux articulations pivot (11 et 11') mutuellement opposées et coaxiales, à la partie intermédiaire (6), lesdits flancs ou longerons (10 et 10') étant convergents en direction de ladite liaison pivot (8).

4. Dispositif selon la revendication 3, **caractérisé en ce que** les deux articulations pivot (11 et 11') reliant la pièce intermédiaire (6) avec les deux longerons ou flancs effilés (10 et 10') de la partie arrière (4) consistent en des paliers à roulements, préférentiellement du type paliers appliques, mutuellement coaxiaux et rapportés sur deux côtés longitudinaux opposés de ladite pièce intermédiaire (6).

5. Dispositif selon la revendication 2 et l'une quelconque des revendications 3 et 4, **caractérisé en ce que** le peson (9) est solidarisé rigidement, par une seconde extrémité d'assemblage (9"), avec une traverse ou une pièce de liaison transversale similaire (12) reliant entre eux les deux longerons ou flancs (10 et 10') de la partie arrière (4), ledit peson (9) présentant une constitution allongée et un arrangement aligné avec l'axe longitudinal (AL).

6. Dispositif selon l'une quelconque des revendications 1 à 5, **caractérisé en ce que** l'axe de rotation (AR) de la liaison pivot (8) reliant la partie intermédiaire de liaison (6) et la partie arrière (4) est situé, selon la direction de l'axe longitudinal (AL), entre, d'une part, le point central ou l'axe (AF) du moyen (3") d'accrochage frontal de la partie avant (3) et, d'autre part, le point d'ancrage ou de fixation (13) du peson (9) sur la partie arrière (4).

7. Dispositif selon l'une quelconque des revendications 1 à 6, **caractérisé en ce que** l'axe de rotation (AR) de la liaison pivot (8) est disposé sensiblement à distance sensiblement égale entre, d'une part, le point central ou l'axe (AF) du moyen (3") d'accrochage frontal de la partie avant (3) et, d'autre part, le point d'ancrage ou de fixation (13) du peson (9) sur la partie arrière (4).

8. Dispositif selon l'une quelconque des revendications 1 à 7, **caractérisé en ce que** la partie avant (3) consiste en une pièce monobloc, préférentiellement venue de fonderie, comprenant un corps allongé (3') en forme de barreau ou de tige monté par emboîtement partiel coulissant dans une première portion constitutive longitudinale (6') de la pièce intermédiaire de liaison (6) et comportant, au niveau de son extrémité libre frontale, un moyen d'accrochage (3") mâle ou femelle avec un point ou un axe central (AF), la direction de coulissement (DC) du corps allongé (3') de la partie avant (3) dans la pièce intermédiaire (6), l'axe longitudinal (AP) du peson (9) de forme allongée et l'axe longitudinal (AL) du dispositif de timon (1) étant colinéaires, préférentiellement coaxiaux.

9. Dispositif selon l'une quelconque des revendications 1 à 8, **caractérisé en ce que** la partie avant (6) coulissante constitue un organe de commande mobile dont le déplacement relatif par rapport à la partie intermédiaire (6) et/ou à la partie arrière (4) déclenche ou génère, le cas échéant proportionnellement, une action dans un système fonctionnel (14) déporté, appartenant à la remorque ou analogue (2) dont fait partie ledit dispositif de timon (1).

10. Remorque (2) mélangeuse semi-portée **agricole pour la distribution de mélanges d'aliments fibreux, granulaires et/ou pulvérulents en vrac,** avec un essieu à roues (15) muni de moyens de freinage (14) et un dispositif de timon (1), du type à commande de freinage par inertie, ce dispositif de timon (1) présentant un axe longitudinal (AL) et comprenant une partie avant (3) d'accrochage à un véhicule tracteur et une partie arrière (4) appartenant au châssis de la remorque (2) ou reliée rigidement à ce dernier ou directement au contenant (5) ou plateau de ladite remorque (2), qui est le cas échéant monté directement sur l'essieu (15) de cette dernière,
remorque (2) **caractérisée en ce que** le dispositif de timon (1) est un dispositif selon l'une quelconque des revendications 1 à 9 et **en ce qu'**il comprend également une partie intermédiaire (6) de liaison qui est reliée, d'une part, à la partie avant (3) avec faculté de coulissement relatif de cette dernière dans la direction de l'axe longitudinal (AL) et, d'autre part, à la partie arrière (4) : i) par l'intermédiaire d'une liaison pivot (8) avec un axe de rotation (AR) sensiblement perpendiculaire à l'axe longitudinal (AL) précité et sensiblement parallèle à l'axe des roues de l'essieu (15) et ii) par l'intermédiaire d'un peson (9) faisant partie du dispositif de timon (1) et bloquant le pivotement autour de l'axe de rotation (AR), l'état des moyens de freinage (14) étant dépendant de la position de coulissement relatif de la partie avant (3) par rapport à la partie intermédiaire (6), et **en ce que** le contenant ou plateau support (5) repose, par l'intermédiaire d'un châssis ou non, sur l'essieu (15) à travers au moins deux pesons latéraux additionnels (16 et 16').

11. Remorque selon la revendication 10, **caractérisée en ce que** le contenant (5) consiste en une cuve munie de moyens internes de mélange de produits et équipée de moyens externes de distribution de produits, ladite cuve (5) étant montée directement sur l'essieu (15) sans châssis intermédiaire, le dispositif de timon (1) étant fixé rigidement à ladite cuve (5).

12. Remorque selon l'une quelconque des revendications 10 et 11, **caractérisée en ce que** le dispositif de timon (1) comprend également un organe (17) de commande manuelle des moyens de freinage (14), tel qu'un levier associé à un moyen de blocage en position à crans, cet organe (17) étant monté sur la pièce intermédiaire de liaison (6).

## Patentansprüche

1. Deichselvorrichtung für einen landwirtschaftlichen Einachs-Mischanhänger zur Verteilung von schüttfähigen faserigen, körnigen und/oder pulverförmigen Futtermischungen, wobei die Vorrichtung (1) eine Längsachse (AL) aufweist und einen vorderen Teil (3) zum Anhängen an ein Zugfahrzeug und einen hinteren Teil (4) umfasst, der zum Fahrgestell des Anhängers (2) gehört oder fest mit diesem oder mit dem Behälter oder der Tragplatte (5) des Anhängers (2) verbunden ist,
wobei die Deichselvorrichtung (1) außerdem einen Verbindungszwischenteil (6) umfasst, der einerseits mit dem vorderen Teil (3) durch eine Gleitverbindung (7) mit der Möglichkeit einer relativen Verschiebung in der Richtung der Längsachse (AL) verbunden ist, und
**dadurch gekennzeichnet, dass** der Verbindungszwischenteil (6) andererseits mit dem hinteren Teil (4) durch eine Schwenkverbindung (8) mit einer zur Längsachse (AL) im Wesentlichen senkrechten Drehachse (AR) und über zumindest eine Waage (9), die die Drehung um die Drehachse (AR) blockiert, verbunden ist, und
dass die Schwenkverbindung (8) konfiguriert ist, um gleichzeitig und in nicht interferierender Weise einerseits eine direkte starre Verbindung zwischen dem Zwischenteil (6) und dem hinteren Teil (4) in der Gleitrichtung des vorderen Teils (3) zu ermöglichen, ohne die Waage (9) zu passieren, und andererseits eine durch die Waage (9) blockierte, frei drehbare Verbindung zwischen den Teilen (4 und 6) zu ermöglichen.

2. Vorrichtung nach Anspruch 1, **dadurch gekennzeichnet, dass** der Zwischenteil (6) die Form eines starren, in Richtung der Längsachse (AL) langgestreckten Bauteils aufweist, mit einem ersten länglichen konstitutiven Abschnitt (6'), der mit Gleiteingriff einen länglichen Zusammenwirkungsabschnitt (3') des vorderen Anhängeteils (3) aufnimmt, und einem zweiten länglichen konstitutiven Abschnitt (6"), mit dem ein erstes Montageende (9') der Waage (9) starr verbunden ist.

3. Vorrichtung nach einem der Ansprüche 1 und 2, **dadurch gekennzeichnet, dass** der hintere Teil (4) zwei Längsträger oder zwei Flanken (10 und 10') aufweist, die seitlich durch die Schwenkverbindung (8) in Form eines gemeinsamen Schwenkgelenks oder zweier einander gegenüberliegender und koaxialer Schwenkgelenke (11 und 11') mit dem Zwischenteil (6) verbunden sind, wobei die Flanken bzw. Längsträger (10 und 10') zur Schwenkverbindung (8) hin zusammenlaufen.

4. Vorrichtung nach Anspruch 3, **dadurch gekennzeichnet, dass** die beiden Schwenkgelenke (11 und 11'), die den Zwischenteil (6) mit den beiden sich verjüngenden Längsträgern bzw. Flanken (10 und 10') des hinteren Teils (4) verbinden, aus Wälzlagern, vorzugsweise vom Flanschlagertyp, bestehen, die zueinander koaxial sind und an zwei gegenüberliegenden Längsseiten des Zwischenteils (6) angebracht sind.

5. Vorrichtung nach Anspruch 2 und einem der Ansprüche 3 und 4, **dadurch gekennzeichnet, dass** die Waage (9) an einem zweiten Montageende (9") mit einem ähnlichen Querträger oder Querverbindungsbauteil (12) starr verbunden ist, der bzw. das die beiden Längsträger bzw. Flanken (10 und 10') des hinteren Teils (4) miteinander verbindet, wobei die Waage (9) einen länglichen Aufbau und eine mit der Längsachse (AL) ausgerichtete Anordnung aufweist.

6. Vorrichtung nach einem der Ansprüche 1 bis 5, **dadurch gekennzeichnet, dass** sich die Drehachse (AR) der Schwenkverbindung (8), die den Verbindungszwischenteil (6) und den hinteren Teil (4) verbindet, in der Richtung der Längsachse (AL) zwischen dem Mittelpunkt oder der Achse (AF) des vorderen Anhängemittels (3") des vorderen Teils (3) einerseits und dem Verankerungs- oder Befestigungspunkt (13) der Waage (9) am hinteren Teil (4) andererseits befindet.

7. Vorrichtung nach einem der Ansprüche 1 bis 6, **dadurch gekennzeichnet, dass** die Drehachse (AR) der Schwenkverbindung (8) in einem im Wesentlichen gleichen Abstand zwischen dem Mittelpunkt oder der Achse (AF) des vorderen Anhängemittels (3") des vorderen Teils (3) einerseits und dem Verankerungs- oder Befestigungspunkt (13) der Waage (9) am hinteren Teil (4) andererseits angeordnet ist.

8. Vorrichtung nach einem der Ansprüche 1 bis 7, **dadurch gekennzeichnet, dass** der vordere Teil (3) aus einem einteiligen, vorzugsweise gegossenen Bauteil besteht, das einen länglichen Körper (3') in Form eines Stabs oder einer Stange umfasst, der durch partiellen Gleiteingriff in einem ersten länglichen konstitutiven Abschnitt (6') des Verbindungszwischenteils (6) montiert ist und im Bereich seines freien vorderen Endes ein männliches oder weibliches Anhängemittel (3") mit einem Mittelpunkt oder einer Mittelachse (AF) aufweist, wobei die Gleitrichtung (DC) des länglichen Körpers (3') des vorderen Teils (3) im Zwischenteil (6), die Längsachse (AP) der länglichen Waage (9) und die Längsachse (AL) der Deichselvorrichtung (1) kollinear, vorzugsweise koaxial, sind.

9. Vorrichtung nach einem der Ansprüche 1 bis 8, **dadurch gekennzeichnet, dass** der gleitende vordere Teil (6) ein bewegliches Steuerorgan darstellt, dessen Relativbewegung in Bezug auf den Zwischenteil (6) und/oder den hinteren Teil (4) gegebenenfalls proportional eine Wirkung in einem entfernten Funktionssystem (14) des Anhängers oder dergleichen (2), zu dem die Deichselvorrichtung (1) gehört, auslöst oder erzeugt.

10. Landwirtschaftlicher Einachs-Mischanhänger (2) zur Verteilung von schüttfähigen faserigen, körnigen und/oder pulverförmigen Futtermischungen, mit einer Radachse (15), die mit Bremsmitteln (14) und einer Deichselvorrichtung (1) vom Typ der Auflaufbremssteuerung ausgestattet ist, wobei die Deichselvorrichtung (1) eine Längsachse (AL) aufweist und einen vorderen Teil (3) zum Anhängen an ein Zugfahrzeug und einen hinteren Teil (4) umfasst, der zum Fahrgestell des Anhängers (2) gehört oder mit diesem oder direkt mit dem Behälter (5) oder der Platte des Anhängers (2) starr verbunden ist, der bzw. die gegebenenfalls direkt auf dessen Achse (15) montiert ist,
wobei der Anhänger (2) **dadurch gekennzeichnet ist, dass** die Deichselvorrichtung (1) eine Vorrichtung nach einem der Ansprüche 1 bis 9 ist, und dass er außerdem einen Verbindungszwischenteil (6) umfasst, der einerseits mit dem vorderen Teil (3) mit der Möglichkeit der relativen Verschiebung desselben in Richtung der Längsachse (AL) und andererseits mit dem hinteren Teil (4) verbunden ist, und zwar: i) über eine Schwenkverbindung (8) mit einer zur Längsachse (AL) im Wesentlichen senkrechten und einer zur Radachse der Achse (15) im Wesentlichen parallelen Drehachse (AR) und ii) über eine Waage (9), die Teil der Deichselvorrichtung (1) ist und die Drehung um die Drehachse (AR) blockiert, wobei der Zustand der Bremsmittel (14) von der relativen Gleitposition des vorderen Teils (3) in Bezug auf den Zwischenteil (6) abhängig ist, und dass der Behälter bzw. die Tragplatte (5) über ein Fahrgestell oder nicht über ein Fahrgestell durch zumindest zwei zusätzliche seitliche Waagen (16 und 16') auf der Achse (15) aufliegt.

11. Anhänger nach Anspruch 10, **dadurch gekennzeichnet, dass** der Behälter (5) aus einer Wanne besteht, die mit inneren Mitteln zum Mischen von Produkten versehen und mit äußeren Mitteln zur Verteilung von Produkten ausgestattet ist, wobei die Wanne (5) ohne dazwischenliegendes Fahrgestell direkt auf der Achse (15) montiert ist, wobei die Deichselvorrichtung (1) starr an der Wanne (5) befestigt ist.

12. Anhänger nach einem der Ansprüche 10 und 11, **dadurch gekennzeichnet, dass** die Deichselvorrichtung (1) außerdem ein Organ (17) zur manuellen Steuerung der Bremsmittel (14) umfasst, wie etwa einen Hebel, der mit einem Mittel zum Blockieren in einer Raststellung verbunden ist, wobei das Organ (17) auf dem Verbindungszwischenteil (6) montiert ist.

## Claims

1. Drawbar device of agricultural semi-mounted mixer trailer, for the bulk distribution of fibrous, granular and/or powdered feed mixtures, this device (1) having a longitudinal axis (AL) and comprising a front part (3) for coupling to a towing vehicle and a rear part (4) belonging to the chassis of the trailer (2) or connected rigidly to the latter or to the container or support platform (5) of said trailer (2),
drawbar device (1) also comprising an intermediate connecting part (6) which is connected, on the one hand, to the front part (3) by a slide link (7) with a capacity for relative sliding in the direction of the longitudinal axis (AL), and **characterised in that** the intermediate connecting part (6) is connected, on the other hand, to the rear part (4) by means of a pivot link (8) with an axis of rotation (AR) substantially perpendicular to the longitudinal axis (AL) and by means of at least one set of scales (9) which blocks rotation about said axis of rotation (AR), and
**in that** said pivot link (8) is configured to ensure simultaneously and in a non-interfering manner, on the one hand, a direct rigid connection between the intermediate (6) and rear (4) parts in the direction of sliding of said front part (3), without passing through the scales (9), and, on the other hand, a connection in free rotation between said parts (4 and 6), blocked by the scales (9).

2. Device according to claim 1, **characterised in that** the intermediate part (6) is in the form of a rigid component of elongate constitution in the direction of the longitudinal axis (AL), with a first longitudinal constituent portion (6') receiving, in sliding nesting relationship, an elongate cooperating portion (3') of the front coupling part (3) and a second longitudinal constituent portion (6") to which is rigidly connected a first assembly end (9') of the scales (9).

3. Device according to any one of claims 1 and 2, **characterised in that** the rear part (4) comprises two side rails or two flanks (10 and 10') connected laterally by the pivot link (8), in the form of a common pivot joint or two mutually opposed and coaxial pivot joints (11 and 11'), to the intermediate part (6), said flanks or side rails (10 and 10') being convergent in the direction of said pivot link (8).

4. Device according to claim 3, **characterised in that** the two pivot joints (11 and 11') connecting the intermediate part (6) to the two tapering side rails or flanks (10 and 10') of the rear part (4) consist of roller bearings, preferably of the flanged bearing type, which are mutually coaxial and mounted on two opposed longitudinal sides of said intermediate part (6).

5. Device according to claim 2 and any one of claims 3 and 4, **characterised in that** the scales (9) are rigidly connected, by a second assembly end (9"), to a crossbar or similar transverse connecting part (12) connecting to each other the two side rails or flanks (10 and 10') of the rear part (4), said scales (9) having an elongate constitution and an arrangement aligned with the longitudinal axis (AL).

6. Device according to any one of claims 1 to 5, **characterised in that** the axis of rotation (AR) of the pivot link (8) connecting the intermediate connecting part (6) and the rear part (4) is situated, in the direction of the longitudinal axis (AL), between, on the one hand, the central point or axis (AF) of the front coupling means (3") of the front part (3) and, on the other hand, the anchoring or fixing point (13) of the scales (9) on the rear part (4).

7. Device according to any one of claims 1 to 6, **characterised in that** the axis of rotation (AR) of the pivot link (8) is disposed substantially at a substantially equal distance between, on the one hand, the central point or axis (AF) of the front coupling means (3") of the front part (3) and, on the other hand, the anchoring or fixing point (13) of the scales (9) on the rear part (4).

8. Device according to any one of claims 1 to 7, **characterised in that** the front part (3) consists of a monobloc component, preferably cast en bloc, comprising an elongate body (3') in the form of a bar or rod mounted by partial nesting in sliding relationship in a first longitudinal constituent portion (6') of the intermediate connecting part (6) and comprising, at the level of its free front end, a male or female coupling means (3") with a central point or axis (AF), the direction of sliding (DC) of the elongate body (3') of the front part (3) in the intermediate part (6), the longitudinal axis (AP) of the scales (9) of elongate form and the longitudinal axis (AL) of the drawbar device (1) being colinear, preferably coaxial.

9. Device according to any one of claims 1 to 8, **characterised in that** the sliding front part (6) constitutes a movable control member of which the relative displacement in relation to the intermediate part (6) and/or to the rear part (4) triggers or generates, if occasion arises proportionally, an action in a remote functional system (14), belonging to the trailer or the like (2) of which said drawbar device (1) forms a part.

10. Agricultural semi-mounted mixer trailer (2) for the bulk distribution of fibrous, granular and/or powdered feed mixtures, with an axle with wheels (15) provided with braking means (14) and a drawbar device (1), of the type with inertia braking control, this drawbar device (1) having a longitudinal axis (AL) and comprising a front part (3) for coupling to a towing vehicle and a rear part (4) belonging to the chassis of the trailer (2) or connected rigidly to the latter or directly to the container (5) or platform of said trailer (2), which if occasion arises is mounted directly on the axle (15) of the latter,
trailer (2) **characterised in that** the drawbar device (1) is a device according to any one of claims 1 to 9 and **in that** it also comprises an intermediate connecting part (6) which is connected, on the one hand, to the front part (3) with a capacity for relative sliding of the latter in the direction of the longitudinal axis (AL) and, on the other hand, to the rear part (4): i) by means of a pivot link (8) with an axis of rotation (AR) substantially perpendicular to the aforementioned longitudinal axis (AL) and substantially parallel to the axis of the wheels of the axle (15) and ii) by means of scales (9) forming part of the drawbar device (1) and blocking pivoting about the axis of rotation (AR), the state of the braking means (14) being dependent on the relative sliding position of the front part (3) in relation to the intermediate part (6), and **in that** the container or support platform (5) rests, by means of a chassis or not, on the axle (15) across at least two additional lateral sets of scales (16 and 16').

11. Trailer according to claim 10, **characterised in that** the container (5) consists of a tank provided with internal product mixing means and equipped with external product distribution means, said tank (5) being mounted directly on the axle (15) without an intermediate chassis, the drawbar device (1) being fixed rigidly to said tank (5).

12. Trailer according to any one of claims 10 and 11, **characterised in that** the drawbar device (1) also comprises a manual control member (17) for the braking means (14) such as a lever associated with a means for locking in position with notches, this member (17) being mounted on the intermediate connecting part (6).
